# EUROPEAN PATENT APPLICATION

(11) **EP 4 029 719 A1**
(43) Date of publication of application: **20.07.2022**
(21) Application number: 21218296.8
(22) Date of filing: 30.12.2021
(51) Int. Cl.: B60L 7/18, B60L 15/20, B60W 30/18, B60T 17/22, B60W 50/14, B60K 35/00, B60Q 1/44

(54) **CONTROL DEVICE FOR VEHICLE**

(30) Priority: 14.01.2021 JP 2021004395
(71) Applicant: Suzuki Motor Corporation, Hamamatsu-shi, Shizuoka 432-8611 (JP)
(72) Inventor: MORIKAWA, Tomoaki, Hamamatsu-shi, Shizuoka, 432-8611 (JP)
(74) Representative: Henkel & Partner mbB

(57) **Abstract**

[Problem to be Solved]

There is provided a control device for a vehicle that can prevent the driver of a following vehicle from being caused to feel discomfort due to the turned-on state of a brake lamp.

[Solution]

A vehicle (1) includes a driving motor (3) capable of outputting a regenerative torque, a meter (2) configured to display a braking force generated in the vehicle (1), and an ECU (5) configured to decide the braking force due to the regenerative torque of the driving motor (3) according to an operation amount of an accelerator pedal, configured to control turning on and off of a brake lamp (4) based on the braking force generated in the vehicle (1), and configured to cause the meter (2) to display the braking force generated in the vehicle (1) to allow a turned-on state of the brake lamp (4) to be distinguished.

## Description

### [Technical Field]

The present invention relates to a control device for a vehicle.

### [Background Art]

In some electric vehicles, regeneration by a motor is utilized, and one pedal driving can be achieved, that is, a regenerative braking force can be controlled by changing the depression amount of an accelerator pedal.

JP2014-76715A describes that, in a vehicle where an increase in regenerative torque generated by an electric motor causes a large braking force, a brake lamp is turned on when the regenerative torque value of the electric motor, calculated based on the traveling state of the vehicle and the operation state of the vehicle, is a value greater than a reference regenerative torque value.

### [Citation List]

### [Patent Literature]

[Patent Literature 1] JP2014-76715A

### [Summary of Invention]

### [Technical Problem]

However, in a case where a braking force is controlled only by the operation of the accelerator pedal, the driver cannot realize what amount of pedal operation turns on the brake lamp.

Therefore, depending on the amount of releasing of the accelerator pedal, the driver may unintentionally turn on or flicker the brake lamp and hence, the driver of a following vehicle may be caused to feel discomfort.

In view of the above, it is an object of the present invention to provide a control device for a vehicle that can prevent the driver of the following vehicle from being caused to feel discomfort due to the turned-on state of the brake lamp.

### [Solution to Problem]

To solve the above-mentioned problem, the present invention provides a control device for a vehicle including a motor capable of outputting a regenerative torque, and a control unit configured to decide a braking force due to the regenerative torque according to an accelerator operation amount, and configured to control turning on and off of a brake lamp based on the braking force generated in the vehicle, the control device including a display unit configured to display the braking force generated in the vehicle, wherein the control unit causes the display unit to display the braking force generated in the vehicle to allow a turned-on state of the brake lamp to be distinguished.

### [Advantageous Effect of Invention]

As described above, according to the present invention, it is possible to prevent the driver of the following vehicle from being caused to feel discomfort due to the turned-on state of the brake lamp.

### [Brief Description of Drawings]

[Figure 1] Figure 1 is a block diagram of a control device for a vehicle according to one embodiment of the present invention.
[Figure 2] Figure 2 is a graph showing examples of the mapping of the regenerative torque of a driving motor of the control device for a vehicle according to one embodiment of the present invention.
[Figure 3] Figure 3 is a view showing a display example of a meter of the control device for a vehicle according to one embodiment of the present invention.
[Figure 4] Figure 4 is a flowchart showing procedure of brake lamp turning-on control processing performed by the control device for a vehicle according to one embodiment of the present invention.
[Figure 5] Figure 5 is a time chart showing an example of the timing at which a brake lamp is turned on during a reduction in vehicle speed in the brake lamp turning-on control processing performed by the control device for a vehicle according to one embodiment of the present invention.
[Figure 6] Figure 6 is a time chart showing an example of the timing at which the brake lamp is turned off during an increase in vehicle speed in the brake lamp turning-on control processing performed by the control device for a vehicle according to one embodiment of the present invention.

### [Description of Embodiment]

A control device for a vehicle according to one embodiment of the present invention is a control device for a vehicle including a motor capable of outputting a regenerative torque, and a control unit configured to decide a braking force due to the regenerative torque according to an accelerator operation amount, and configured to control turning on and off of a brake lamp based on the braking force generated in the vehicle, the control device including a display unit configured to display the braking force generated in the vehicle, wherein the control unit causes the display unit to display the braking force generated in the vehicle to allow a turned-on state of the brake lamp to be distinguished.

With such a configuration, the control device for a vehicle according to one embodiment of the present invention can prevent the driver of a following vehicle from being caused to feel discomfort due to the turned-on state of the brake lamp.

### [Embodiment]

Hereinafter, a control device for a vehicle according to an embodiment of the present invention will be described in detail with reference to drawings.

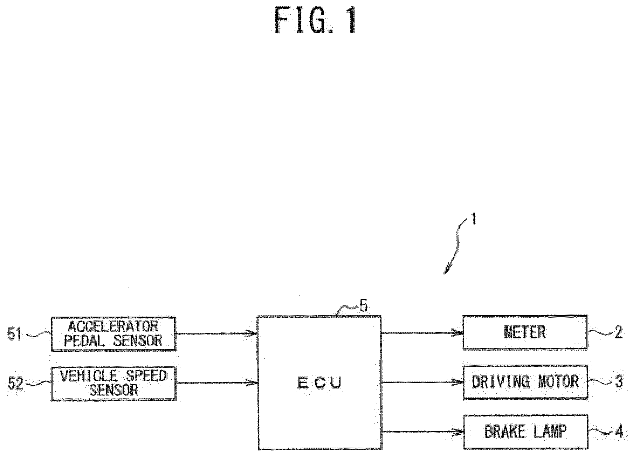

In Figure 1, the control device for a vehicle according to one embodiment of the present invention is mounted on a vehicle 1, and the vehicle 1 includes a driving motor 3 serving as a motor, and an electronic control unit (ECU) 5 serving as a control unit.

The driving motor 3 may be, for example, a synchronous motor including a rotor and a stator, a plurality of permanent magnets being embedded into the rotor, a stator coil being wound around the stator. When a three-phase AC voltage is applied to the stator coil, a rotating magnetic field is formed on the stator, and the rotor rotates due to the rotating magnetic field, so that the driving motor 3 generates a driving force.

The driving motor 3 is driven such that rotational resistance at the time of power generation is utilized to brake the vehicle 1. With such a configuration, the driving motor 3 has a function of generating power by regeneration.

The ECU 5 is formed of a computer unit including a central processing unit (CPU), a random access memory (RAM), a read only memory (ROM), a flash memory that stores backup data and other data, an input port, and an output port.

The ROM of the computer unit stores a program for causing the computer unit to serve as the ECU 5 together with various constants, various mappings and the like.

In other words, when the CPU executes the program stored in the ROM using the RAM as the work area, the computer unit serves as the ECU 5 in this embodiment.

Various sensors, such as an accelerator pedal sensor 51 and a vehicle speed sensor 52, and switches are connected to the input port of the ECU 5.

The accelerator pedal sensor 51 detects an accelerator opening degree, being the degree of opening of an accelerator pedal not shown in the drawing, the accelerator pedal being operated by the driver. The vehicle speed sensor 52 detects a speed of the vehicle 1.

In contrast, in addition to the above-mentioned driving motor 3, various elements to be controlled including a meter 2, serving as a display unit, and a brake lamp 4 are connected to the output port of the ECU 5.

The meter 2 displays information on the braking force generated in the vehicle 1. The brake lamp 4 indicates to the driver of the following vehicle that a braking force is being applied to the vehicle 1.

The ECU 5 controls the braking force due to regeneration of the driving motor 3, based on the operation amount of the accelerator pedal operated by the driver, being an accelerator operation amount, and a vehicle speed.

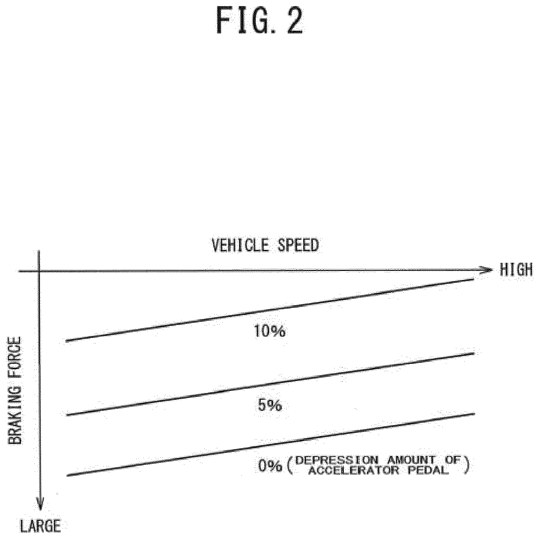

The ECU 5 acquires a braking force based on the mapping shown in Figure 2, for example, where a regenerative torque, being the braking force of the driving motor 3, is decided based on the vehicle speed and the depression amount of the accelerator pedal.

The ECU 5 causes the meter 2 to display the braking force generated in the vehicle 1. The ECU 5 causes the meter 2 to display the braking force generated in the vehicle 1 to allow the turned-on state of the brake lamp 4 to be distinguished.

When the braking force generated in the vehicle 1 is greater than a first threshold, the ECU 5 turns on the brake lamp 4. When the braking force generated in the vehicle 1 is less than a second threshold, which is lower than the first threshold, the ECU 5 turns off the brake lamp 4.

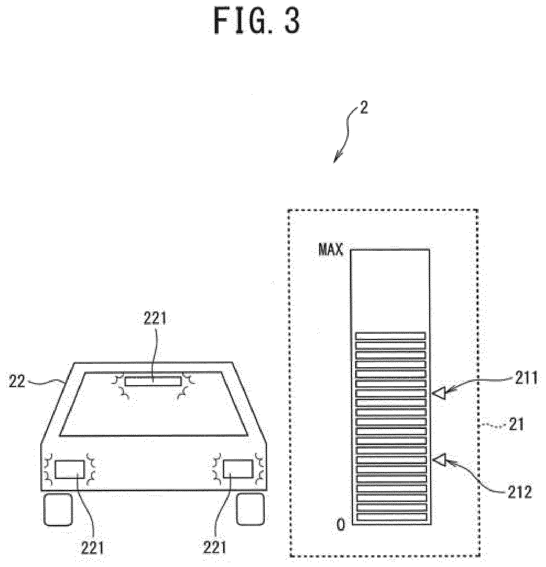

As shown in Figure 3, for example, the ECU 5 causes a braking force display unit 21 of the meter 2 to display a braking force in the form of segments. The ECU 5 may cause a braking force to be displayed by the movement of a pointer.

As shown in Figure 3, the ECU 5 causes the braking force display unit 21 to display a first threshold display unit 211 at a position that corresponds to the first threshold. The ECU 5 causes the braking force display unit 21 to display a second threshold display unit 212 at a position that corresponds to the second threshold.

The ECU 5 causes the braking force display unit 21 to display a braking force due to a regenerative torque decided according to the operation amount of the accelerator pedal, being the accelerator operation amount.

As shown in Figure 3, the ECU 5 may cause a brake lamp state display unit 22 to display the turned-on state of the brake lamp 4. The brake lamp state display unit 22 is configured such that, in the profile of the vehicle 1 as viewed from behind, brake lamp display units 221 are disposed at positions that correspond to the positions where the brake lamp 4 is provided. When the brake lamp 4 is turned on, the brake lamp state display unit 22 displays a state of the brake lamp display units 221 being turned on by turning on red lights, for example.

The ECU 5 may cause the braking force display unit 21 to display braking power acquired from a braking torque applied to a drive shaft not shown in the drawing of the vehicle 1 and the number of revolutions of the drive shaft. In such a case, the ECU 5 causes the first threshold display unit 211 to be displayed at a position of braking power that corresponds to the first threshold, and causes the second threshold display unit 212 to be displayed at a position of braking power that corresponds to the second threshold. That is, the position of the first threshold display unit 211 and the position of the second threshold display unit 212 are changed according to the number of revolutions of the drive shaft.

The drive shaft torque of braking power is set such that the drive shaft torque reduces as a vehicle speed increases. The braking power per se is set such that the braking power increases corresponding to the vehicle speed. The braking power may be acquired from the product of drive shaft torque and the number of revolutions of the drive shaft, or may be acquired from the torque of the driving motor 3 and the number of revolutions of the driving motor 3.

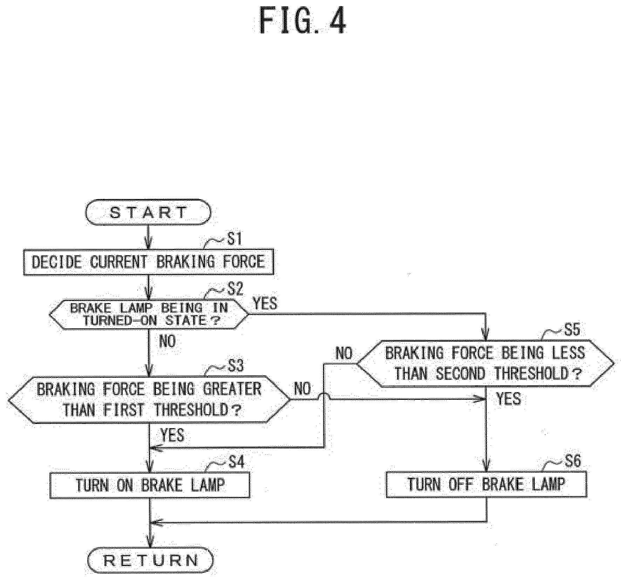

The control device for a vehicle according to this embodiment has the above-mentioned configuration. Brake lamp turning-on control processing performed by the control device for a vehicle will be described with reference to Figure 4. The brake lamp turning-on control processing described below is started when the ECU 5 starts the action, and the brake lamp turning-on control processing is executed at time intervals set in advance.

In step S1, the ECU 5 decides a current braking force based on the operation amount of the accelerator pedal and a vehicle speed. After the ECU 5 executes processing in step S1, the ECU 5 executes processing in step S2.

In step S2, the ECU 5 determines whether the brake lamp 4 is in the turned-on state. When it is determined that the brake lamp 4 is in the turned-on state, the ECU 5 executes processing in step S5.

When it is determined that the brake lamp 4 is not in the turned-on state, the ECU 5 executes processing in step S3.

In step S3, the ECU 5 determines whether the braking force of the driving motor 3 is greater than the first threshold.

When it is determined that the braking force of the driving motor 3 is greater than the first threshold, the ECU 5 executes processing in step S4. When it is determined that the braking force of the driving motor 3 is not greater than the first threshold, the ECU 5 executes processing in step S6.

In step S4, the ECU 5 turns on the brake lamp 4. After the ECU 5 executes processing in step S4, the ECU 5 finishes the brake lamp turning-on control processing.

In step S5, the ECU 5 determines whether the braking force of the driving motor 3 is less than the second threshold.

When it is determined that the braking force of the driving motor 3 is less than the second threshold, the ECU 5 executes processing in step S6. When it is determined that the braking force of the driving motor 3 is not less than the second threshold, the ECU 5 executes processing in step S4.

In step S6, the ECU 5 turns off the brake lamp 4. After the ECU 5 executes processing in step S6, the ECU 5 finishes the brake lamp turning-on control processing.

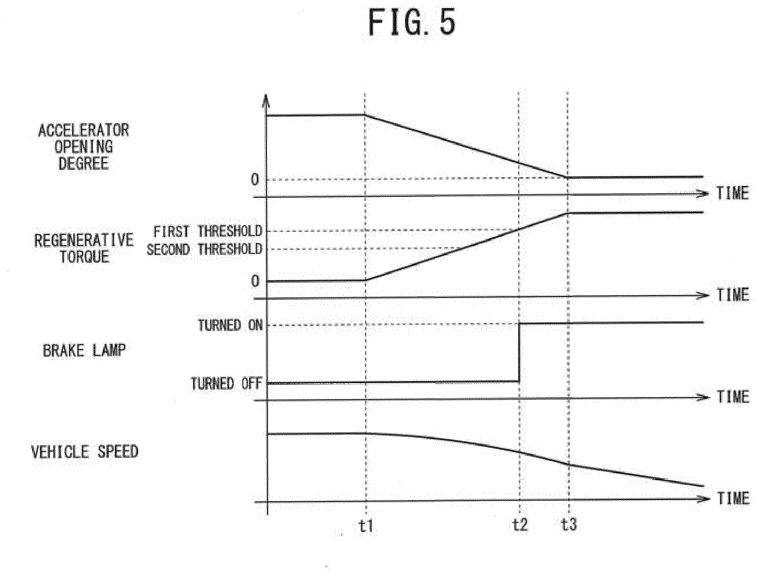

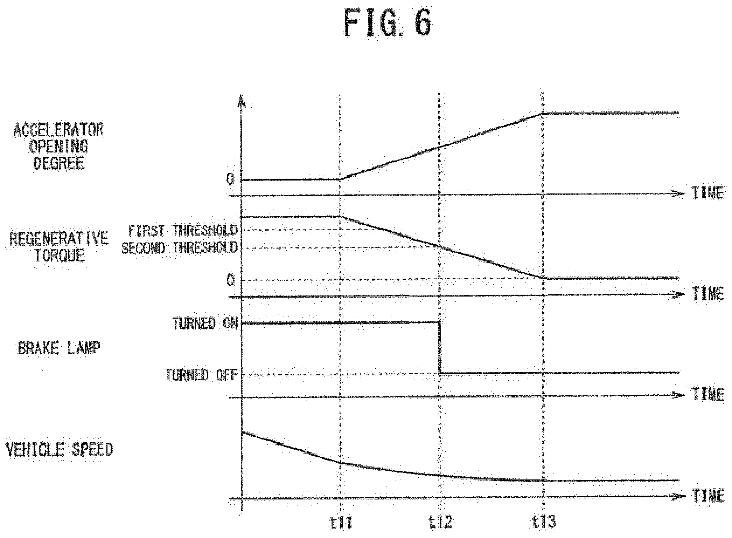

The action caused by such brake lamp turning-on control processing will be described with reference to Figure 5 and Figure 6.

As shown in Figure 5, when the accelerator opening degree is reduced at time t1, a regenerative torque is outputted from the driving motor 3 as a braking force, and a vehicle speed is reduced in a manner that the reduction amount of vehicle speed is gradually increased.

When the regenerative torque becomes greater than the first threshold at time t2, the brake lamp 4 is turned on. When the accelerator pedal is released at time t3, the regenerative torque assumes a constant value and the vehicle speed reduces by a constant reduction amount.

As shown in Figure 6, when the accelerator pedal starts to be depressed at time t11, the regenerative torque from the driving motor 3 is reduced, and the reduction amount of vehicle speed is gradually reduced.

When the regenerative torque becomes less than the second threshold at time t12, the brake lamp 4 is turned off. The regenerative torque becomes zero at time t13, and the vehicle speed assumes a constant vehicle speed.

As described above, in this embodiment, the ECU 5 causes the meter 2 to display the braking force generated in the vehicle 1 to allow the turned-on state of the brake lamp 4 to be distinguished.

With such a configuration, whether the brake lamp 4 is being turned on or off can be distinguished based on the braking force displayed on the meter 2, and the driver can visually realize what amount of operation of the accelerator pedal turns on or off the brake lamp 4. Therefore, the driver can be prevented from unintentionally turning on or flickering the brake lamp 4 and hence, it is possible to prevent the driver of the following vehicle from being caused to feel discomfort.

When the braking force generated in the vehicle 1 is greater than the first threshold, the ECU 5 turns on the brake lamp 4, and when the braking force generated in the vehicle 1 is less than the second threshold, which is lower than the first threshold, the ECU 5 turns off the brake lamp 4. The ECU 5 causes the braking force display unit 21 to display the first threshold display unit 211 at a position that corresponds to the first threshold, and the ECU 5 causes the braking force display unit 21 to display the second threshold display unit 212 at a position that corresponds to the second threshold.

Two thresholds are provided to switch between turning on and off of the brake lamp 4 and hence, hunting in turning on and off the brake lamp 4 can be prevented. Further, the driver can visually realize turning on and off of the brake lamp 4 and hence, it is possible to prevent the driver of the following vehicle from being caused to feel discomfort.

The ECU 5 also causes the braking force display unit 21 to display a braking force due to the regenerative torque of the driving motor 3 decided according to the operation amount of the accelerator pedal, being the accelerator operation amount.

The braking force due to the regenerative torque decided according to the accelerator operation amount is displayed to allow turning on and off of the brake lamp 4 to be distinguished according to the displayed braking force. Therefore, the driver can visually realize what amount of operation of the accelerator pedal turns on or off the brake lamp 4. Accordingly, the driver can be prevented from unintentionally turning on or flickering the brake lamp 4 and hence, it is possible to prevent the driver of the following vehicle from being caused to feel discomfort.

A larger amount of depression of the accelerator pedal, that is, a larger accelerator operation amount, causes the ECU 5 to set a smaller braking force due to a regenerative torque.

Further, a higher vehicle speed causes the ECU 5 to set a smaller braking force due to a regenerative torque, and such a braking force is displayed on the meter 2.

By changing the display of a braking force according to a vehicle speed, the driver can realize a correct braking force. Therefore, the driver can be prevented from unintentionally turning on or flickering the brake lamp 4 and hence, it is possible to prevent the driver of the following vehicle from being caused to feel discomfort.

The ECU 5 causes the braking force display unit 21 to display braking power acquired from a braking torque applied to the drive shaft of the vehicle 1 and the number of revolutions of drive shaft. The ECU 5 causes the first threshold display unit 211 to be displayed at a position of braking power that corresponds to the first threshold. The ECU 5 causes the second threshold display unit 212 to be displayed at a position of braking power that corresponds to the second threshold.

In the case where braking power is displayed, when an attempt is made to control turning on and off of the brake lamp 4 with the same braking force, braking power and thresholds are also varied according to the number of revolutions of the drive shaft.

By displaying the thresholds at positions that correspond to braking power, it is possible to allow the driver to visually realize turning on and off of the brake lamp 4. Therefore, the driver can be prevented from unintentionally turning on or flickering the brake lamp 4 and hence, it is possible to prevent the driver of the following vehicle from being caused to feel discomfort.

In this embodiment, the description has been made with respect to an example where the ECU 5 performs various determinations and calculations based on various pieces of sensor information. However, the configuration is not limited to the above. A configuration may be adopted where the vehicle 1 includes a communication unit that can communicate with a device disposed outside the vehicle, such as an external server, various determinations and calculations are performed by the device disposed outside the vehicle based on detection information from various sensors transmitted from the communication unit, the determination result and the calculation result are received by the communication unit, and various controls are performed by using the received determination result and the calculation result.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 2 meter (display unit), 3 driving motor (motor), 4 brake lamp, 5 ECU (control unit), 21 braking force display unit, 22 brake lamp state display unit, 51 accelerator pedal sensor, 52 vehicle speed sensor, 211 first threshold display unit, 212 second threshold display unit, 221 brake lamp display unit

## Claims

1. A control device for a vehicle (1) including
a motor (3) capable of outputting a regenerative torque, and
a control unit (5) configured to decide a braking force due to the regenerative torque according to an accelerator operation amount, and configured to control turning on and off of a brake lamp (4) based on the braking force generated in the vehicle (1),
the control device comprising a display unit (2) configured to display the braking force generated in the vehicle (1), wherein
the control unit (5) causes the display unit (2) to display the braking force generated in the vehicle (1) to allow a turned-on state of the brake lamp (4) to be distinguished.

2. The control device for a vehicle (1) as claimed in claim 1, wherein the control unit (5) turns on the brake lamp (4) in a case where the braking force generated in the vehicle (1) is greater than a first threshold, the control unit (5) turns off the brake lamp (4) in a case where the braking force generated in the vehicle (1) is less than a second threshold, which is lower than the first threshold, and the control unit (5) causes marks to be displayed at positions that correspond to the first threshold and the second threshold of the braking force generated in the vehicle (1) and displayed on the display unit (2).

3. The control device for a vehicle (1) as claimed in claim 1 or claim 2, wherein the control unit (5) causes the display unit (2) to display the braking force due to the regenerative torque decided according to the accelerator operation amount.

4. The control device for a vehicle (1) as claimed in claim 3, wherein a larger accelerator operation amount causes the control unit (5) to set a smaller braking force due to the regenerative torque.

5. The control device for a vehicle (1) as claimed in any one of claim 1 to claim 4, wherein a higher vehicle speed causes the control unit (5) to set a smaller braking force due to the regenerative torque.

6. The control device for a vehicle (1) as claimed in claim 2, wherein the control unit (5) causes the display unit (2) to display braking power acquired from a torque of a drive shaft of the vehicle (1) and the number of revolutions of the drive shaft, and causes the marks to be displayed at positions of the braking power that correspond to the first threshold and the second threshold.
